# EUROPÄISCHE PATENTANMELDUNG

(11) **EP 1 544 622 A2**
(43) Veröffentlichungstag der Anmeldung: **22.06.2005**
(21) Anmeldenummer: 04105680.5
(22) Anmeldetag: 11.11.2004
(51) Int. Cl.: G01P 3/481, F02D 41/34

(54) **VORRICHTUNG UND VERFAHREN ZUR ERFASSUNG DER WINKELSTELLUNG EINER NOCKENWELLE ODER KURBELWELLE EINER BRENNKRAFTMASCHINE**

(30) Priorität: 19.12.2003 DE 10359927
(71) Anmelder: SIEMENS AKTIENGESELLSCHAFT, 80333 München (DE)
(72) Erfinder: Kettl, Thomas, 94348, Atting (DE)

(57) **Zusammenfassung**

Die Erfindung betrifft eine Vorrichtung und ein Verfahren zur Erfassung der Winkelstellung einer Nockenwelle oder Kurbelwelle einer Brennkraftmaschine mit einem Geberrad, welches zwei in Umfangsrichtung verlaufende Spuren (1, 2) aufweist, auf denen in regelmäßigen Abständen Winkelmarken (7), sowie Informationsmarken (26, 27, 28, 29) angeordnet sind, die eine bestimmte Winkelstellung der Welle markieren.

## Beschreibung

Die Erfindung betrifft eine Vorrichtung und ein Verfahren zur Erfassung der Winkelstellung einer Nockenwelle oder Kurbelwelle einer Brennkraftmaschine.

Bei Brennkraftmaschinen werden die Ein- und Auslassventile der Zylinder üblicherweise durch eine mit der Kurbelwelle mechanisch gekoppelte Nockenwelle geöffnet und geschlossen. Die Einspritzventile für den Kraftstoff sowie die Zündung werden jedoch im allgemeinen nicht mechanisch gesteuert, sondern elektronisch durch das Betriebssteuergerät (ECU, Electronic Control Unit) der Brennkraftmaschine. Um die Zündungs- und Einspritzzeitpunkte für die Zylinder berechnen zu können, muss der ECU zu jeder Zeit die Winkelstellung der Kurbelwelle bekannt sein. Insbesondere muss beim Start der Brennkraftmaschine zunächst die aktuelle Motorposition bestimmt werden, bevor die erste Zündung erfolgen kann. Hierzu wird im allgemeinen an der Kurbelwelle ein Signalgeber zur Bestimmung der Winkelstellung vorgesehen. Da bei einem Viertaktmotor die Kurbelwelle in einem Arbeitsspiel zweimal umläuft, genügt die Erfassung des Kurbelwellenwinkels zur eindeutigen Identifizierung der Zündfolge der einzelnen Zylinder jedoch nicht aus. Deshalb wird üblicherweise auch ein Signalgeber an der Nockenwelle vorgesehen, der beispielsweise einen 180°-Zahn abtastet und ein Signal liefert, mit dem die Kurbelwellendrehstellung eindeutig einer bestimmten Motorposition in der ersten oder der zweiten Hälfte eines Arbeitsspiels zugeordnet werden kann.

Als Vorrichtung zur Erfassung der Winkelstellung der Kurbelwelle wird üblicherweise ein Geberrad verwendet, das mit der Welle drehfest verbunden ist und auf seinem Umfang in regelmäßiger Anordnung eine Folge von Zähnen sowie eine oder zwei Zahnanomalien in Form von fehlenden Zähnen besitzt, die mit einem Aufnehmer abgetastet werden. Die beiden Zahnlücken definieren beispielsweise den oberen und unteren Totpunkt. Eine derartige Vorrichtung zur Bestimmung der Motorposition hat jedoch den Nachteil, dass es beim Starten der Brennkraftmaschine relativ lange dauert, bis die Winkelstellung der Kurbelwelle erfasst und eine Synchronisation für die genaue Bestimmung der Kraftstoffeinspritzung und Zündung möglich ist. Bei einer ungünstigen Ausgangslage der Kurbelwelle bedarf es nämlich nahezu einer halben Umdrehung der Kurbelwelle, bis das erste Mal eine Zahnlücke detektiert wird. Erst nach dem Erkennen der Zahnlücke können die Signale zur genauen Ansteuerung der elektronischen Kraftstoffeinspritzung für die Zylinder der Brennkraftmaschine berechnet werden.

Ein weiterer Nachteil der herkömmlichen Messvorrichtung liegt in der Ungenauigkeit, mit der die Position der Zahnlücken, welche den oberen und/oder unteren Totpunkt definieren, detektiert werden kann. Da der Sensor nur beim Vorbeilauf eines Zahns ein Signal abgibt, erzeugt eine Zahnlücke von beispielsweise zwei fehlenden Zähnen ein konstant niedriges Signal, welches keine genaue Positionsbestimmung ermöglicht.

Zudem ist es schwierig, Zahnlücken von unterschiedlicher Länge voneinander zu unterscheiden, da der Sensor nur den zeitlichen Abstand der vorbeilaufenden Zähne erfasst und dieser auch durch eine plötzliche Beschleunigung oder Verzögerung der Welle, beispielsweise während einer Zündung, beeinflusst werden kann. Aus diesem Grund dürfen sich die Zahnlücken nicht an Winkelstellungen befinden, an denen hohe Drehzahlgradienten auftreten, z.B. eine Zündung oder Kompression. Eine plötzliche Beschleunigung der Kurbelwelle während des Vorbeilaufens einer Zahnlücke an dem Sensor kann auch dazu führen, dass die Lücke gänzlich übersehen wird. Deshalb sind schmale Lücken mit nur einem fehlenden Zahn zur Markierung ungeeignet.

In der Offenlegungsschrift DE 100 48 169 A1 ist eine Vorrichtung zur Erfassung der Winkelstellung einer Nockenwelle oder Kurbelwelle einer Brennkraftmaschine offenbart, welche ein drehbar gelagertes und mit der Welle mechanisch gekoppeltes Geberrad aufweist. Das Geberrad ist als Zahnrad mit 60 Zähnen ausgebildet. Zur Markierung von bestimmten Winkelstellungen der Welle weist das Geberrad außerdem vier Markierungen auf, die jeweils aus zwei Zahnlücken bestehen, zwischen denen eine vorgegebene Zahl von Zähnen angeordnet ist. Die vier Markierungen unterscheiden sich untereinander durch die Anzahl von Zähnen zwischen den Zahnlücken.

Die DE 100 48 169 A1 vermeidet also das Problem, mehrere Zahnlücken nach ihrer Länge unterscheiden zu müssen, da sie nur gleich große Zahnlücken verwendet. Ein Nachteil liegt jedoch darin, dass eine einzelne Markierung, im folgenden Informationsmarke genannt, sich über viele Zahnteilungen erstreckt. Die längste der in Fig. 2 der oben genannten Druckschrift dargestellten Informationsmarken benötigt beispielsweise acht Zahnteilungen: Je zwei Zahnteilungen für die Zahnlücken und vier Zahnteilungen für die dazwischenliegenden Zähne. Dies hat zur Folge, dass auf einem Geberrad mit 60 Zähnen nur wenige verschiedene Informationsmarken untergebracht werden können. Dies führt, wie oben beschrieben, zu einer relativ langsamen Synchronisierung beim Start der Brennkraftmaschine. Außerdem ist es bei der DE 100 480 169 A1 nicht möglich, eine Rückdrehung der Kurbelwelle zu erkennen, wie sie häufig nach dem Ausschalten des Motors auftritt.

Der Erfindung liegt daher die Aufgabe zugrunde, eine Vorrichtung und ein Verfahren zur Erfassung der Winkelstellung einer Nockenwelle oder Kurbelwelle einer Brennkraftmaschine bereitzustellen, mit denen die Winkelstellung der Welle insbesondere beim Start in kurzer Zeit und mit großer Genauigkeit erfasst werden kann.

Diese Aufgabe wird durch die in den unabhängigen Ansprüchen 1 und 13 gekennzeichnete Erfindung gelöst. Vorteilhafte Ausgestaltungen sind in den Unteransprüchen angegeben.

Die erfindungsgemäße Vorrichtung zur Erfassung der Winkelstellung einer Kurbel- oder Nockenwelle weist ein Geberrad auf, welches drehfest mit der Kurbel- oder Nockenwelle verbindbar ist. Auf dem Geberrad befindet sich eine erste in Umfangsrichtung verlaufende Spur, auf der abschnittsweise Winkelmarken in gleichmäßigen Winkelabständen von jeweils einem Schrittwinkel angeordnet sind, und auf der außerdem mindestens eine von den Winkelmarken verschiedene Informationsmarke angeordnet ist, welche eine bestimmte Winkelstellung der Welle markiert, wobei die Winkel- und Informationsmarke der ersten Spur durch einen ersten Sensorkopf erfassbar sind. Das Geberrad besitzt ferner eine zweite in Umfangsrichtung verlaufende Spur, auf der abschnittsweise Winkelmarken in gleichmäßigen Winkelabständen von jeweils einem Schrittwinkel angeordnet sind, welche durch einen zweiten Sensor erfassbar sind.

Das erfindungsgemäße Geberrad zeichnet sich also durch eine zweite Spur aus, welche zusätzliche Informationen enthalten kann. Hierdurch wird die Informationsdichte des Geberrades erhöht, was auf verschiedene vorteilhafte Arten genutzt werden kann:

Die Informationsmarken werden beispielsweise durch eine oder mehrere fehlende Winkelmarken gebildet.

Bevorzugt ist auch auf der zweiten Spur mindestens eine von den Winkelmarken verschiedene Informationsmarke angeordnet, die eine andere Winkelstellung der Welle markiert. Es können also auf beiden Spuren Informationsmarken angeordnet werden, so dass die Anzahl der markierbaren Winkelstellungen der Welle verdoppelt wird. Da jede Spur einzeln ausgelesen wird, muss eine Informationsmarke nämlich nur von den anderen Informationsmarken auf der gleichen Spur unterscheidbar sein.

Gemäß einer besonders bevorzugten Ausgestaltung sind die Winkelmarken auf beiden Spuren derart verteilt, dass über den gesamten Umfang des Geberrades in gleichmäßigen Winkelabständen von jeweils einem Schrittwinkel entweder auf der ersten oder auf der zweiten Spur oder auf beiden Spuren eine Winkelmarke vorhanden ist. Der Vorteil dieser Ausführungsform liegt darin, dass, während der eine Sensorkopf beispielsweise eine Informationsmarke abtastet, die von einer Lücke aus drei fehlenden Winkelmarken gebildet wird, der andere Sensorkopf in dieser Zeit drei Winkelmarken detektiert und aus den beiden Signalen der Sensorköpfe zusammen daher genau festgestellt werden kann, wie breit die vom ersten Sensorkopf erfasste Lücke ist. In diesem Fall liefert die zweite Spur also sozusagen ein Taktsignal, welches bei der Auswertung des Signals von der ersten Spur verwendet wird. Im Gegensatz zur herkömmlichen Drehwinkelerfassung muss daher kein "Timer" verwendet werden, mit dem der Zeitabstand zwischen der Detektion zweier Winkelmarken in einen ungefähren Winkelabstand umgerechnet wird. Zudem kann auch eine kleine Lücke, die beispielsweise durch nur eine fehlende Winkelmarke gebildet wird, sicher erkannt werden. Da also auch Lücken aus nur einer fehlenden Winkelmarke als Informationsmarke verwendet werden können, können Informationen binär auf der Geberrad codiert werden, was die erreichbare Informationsdichte auf dem Geberrad erheblich erhöht.

Das Geberrad wird beispielsweise durch ein Zahnrad gebildet, wobei die Winkelmarken Zähne sind, deren absteigende Flanken jeweils durch eine Zahnteilung voneinander beabstandet sind. Bei dieser Ausführungsform können die Informationsmarken nicht nur durch Zahnlücken aus einem oder mehreren fehlenden Zähnen gebildet werden, sondern auch aus einem durchgehenden Zahn, der sich über zwei oder mehr Zahnteilungen erstreckt. Die Wahl der Informationsmarken hängt unter anderem davon ab, auf welche Weise die Zähne von den Sensorköpfen detektiert werden: Wird jeweils nur die absteigende Flanke eines Zahns erfasst und zur Auswertung verwendet, können nur fehlende Zähne als Informationsträger dienen. Häufig werden jedoch nicht nur die Flanken detektiert, sondern auch die Signalhöhe, also ob sich der Sensorkopf über einem Zahn (high level) oder über einer Lücke zwischen zwei Zähnen (low level) befindet. In diesem Fall kann als Informationsmarke auch ein durchgehender Zahn verwendet werden.

Gemäß einer besonders einfach herstellbaren und daher bevorzugten Ausführungsform verlaufen die erste und die zweite Spur auf dem Geberrad nebeneinander. Somit ist es möglich, an einer Winkelstellung, an der auf beiden Spuren ein Zahn vorgesehen ist, einen gemeinsamen, sich in der Breite über beide Spuren erstreckenden Zahn vorzusehen. In dieser Ausführung lässt sich ein erfindungsgemäßes Geberrad einfach aus einem Zahnrad herstellen. Hierbei werden einige Zähne in Axialrichtung zur Hälfte abgefräst, so dass sie danach halb so breit sind wie die übrigen Zähne.

Bevorzugt wird die erfindungsgemäße Vorrichtung zur Erfassung der Winkelstellung einer Kurbelwelle verwendet. Bei dieser Anwendung beträgt der Schrittwinkel am Geberrad vorzugsweise 1°-10° und besonders bevorzugt 6°, d.h., dass beispielsweise 60 Winkelmarken auf einer Spur angeordnet sein können.

Die Erfindung kann aber auch zur Erfassung der Winkelstellung einer Nockenwelle verwendet werden. Da die Nockenwelle sich nur halb so schnell dreht wie die Kurbelwelle, kann hier ein kleinerer Schrittwinkel von zum Beispiel nur 3° gewählt werden. Bei dieser Ausführungsform ist jedoch erforderlich, dass die Nockenwelle starr mit der Kurbelwelle verbunden ist, beispielsweise durch ein Zahnrad. Die Kopplung zwischen Kurbel- und Nockenwelle sollte möglichst kein Spiel aufweisen, damit der aktuelle Kurbelwellenwinkel auch an der Nockenwelle mit großer Genauigkeit abzulesen ist. Eine derartige mechanische Kopplung ist zwar aufwendig, dafür entfällt bei dieser Lösung jedoch der sonst übliche Kurbelwellensensor. Ist die Nockenwelle verstellbar, muss darauf geachtet werden, dass die Winkelstellung in der Grundstellung gemessen wird.

Die gesamte Messanordnung zur Erfassung der Winkelstellung einer Nockenwelle oder Kurbelwelle einer Brennkraftmaschine umfasst vorzugsweise die bisher beschriebene Vorrichtung, einen ersten Sensorkopf zum Abtasten der ersten Spur, einen zweiten Sensorkopf zum Abtasten der zweiten Spur und ein Steuergerät zum Auswerten der von den beiden Sensorköpfen ausgegebenen Ausgangssignale. Das Steuergerät ist beispielsweise das elektronische Betriebssteuergerät (ECU). Als Sensorköpfe kommen alle bekannten Sensorarten in Frage. Bevorzugt werden aktive Sensoren auf der Basis des Hall-Effektes verwendet, da diese schon bei kleinen Drehzahlen ein Signal liefern. Passive Drehzahlsensoren, wie beispielsweise induktive Sensoren, auch MCPS (magnetic crankshaft position sensor) genannt, liefern dagegen erst bei Drehzahlen über 30 min⁻¹ ein verwertbares Signal. Weiterhin können auch andere aktive Sensoren (active crankshaft position sensors, ACPS) wie MR-Sensoren und GMR-Sensoren eingesetzt werden.

In einer besonders bevorzugten Ausführungsform ist der erste Sensorkopf gegenüber dem zweiten Sensorkopf in Umfangsrichtung entweder um einen Versatzwinkel versetzt, der kleiner ist als der Schrittwinkel, oder um eine Summe aus dem Versatzwinkel und einem Vielfachen des Schrittwinkels. Dies hat folgende Vorteile: Zum einen wird die Auflösung der Winkelerfassung erhöht, da an Abschnitten des Geberrades, an denen auf beiden Spuren Winkelmarken angeordnet sind, mit jedem Schrittwinkel zwei zeitlich versetzte Signale von den Sensorköpfen empfangen werden. Beträgt der Schrittwinkel 6°, empfangen die Sensorköpfe also beispielsweise abwechselnd alle 3° ein Signal. Die Winkelstellung der Welle lässt sich also mit einer Genauigkeit von 3° feststellen.

Der andere Vorteil der versetzten Anordnung der Sensorköpfe liegt darin, dass dadurch auch eine Drehrichtungsumkehr erkannt werden kann. Hierzu ist es von Vorteil, wenn die Sensorköpfe nicht gerade um einen halben Schrittwinkel gegeneinander versetzt werden, sondern beispielsweise nur um ein Sechstel des Schrittwinkels. An der Reihenfolge, an der eine sich über beide Spuren erstreckende Winkelmarke von den beiden Sensorköpfen detektiert wird, lässt sich die Drehrichtung ableiten. Somit ist es möglich, ein Zurückdrehen des Motors nach dem Abschalten zu verfolgen, so dass beim nächsten Neustart bereits ein Wert für die Winkelstellung der Nockenwelle oder Kurbelwelle in dem elektronischen Betriebssteuergerät gespeichert ist.

Es ist auch denkbar, eine dritte Zahnspur vorzusehen, um die Informationsdichte noch weiter zu erhöhen.

Die Erfindung stellt außerdem ein Verfahren zur Erfassung der Winkelstellung einer Nockenwelle oder Kurbelwelle einer Brennkraftmaschine bereit, welches ein Geberrad verwendet, das drehfest mit der Kurbel- oder Nockenwelle verbunden ist und zwei in Umfangsrichtung verlaufende Spuren aufweist, auf denen abschnittsweise in gleichmäßigen Winkelabständen Winkelmarken angeordnet sind. Auf einer oder beiden Spuren sind außerdem mehrere von den Winkelmarken und voneinander verschiedene Informationsmarken angeordnet, die jeweils eine bestimmte Winkelstellung der Welle markieren und an Positionen angeordnet sind, an denen sich auf der jeweils anderen Spur ein Abschnitt befindet, in dem in gleichmäßigen Winkelabschnitten Winkelmarken angeordnet sind. Jede der beiden Spuren wird beim Umlaufen der Welle durch einen Sensorkopf abgetastet, der ein zeitkontinuierliches an ein Steuergerät ausgibt. Hierbei wird beim Abtasten einer Winkelmarke ein Taktsignal erzeugt. Das beim Abtasten einer Informationsmarke erzeugte Signal wird unter Verwendung des von der anderen Spur ausgelesenen Taktsignals ausgewertet und einer bestimmten Winkelstellung zugeordnet.

Im folgenden wird die Erfindung anhand von Ausführungsbeispielen unter Bezugnahme auf die beiliegende Zeichnung näher erläutert. Die Zeichnung zeigt:
- Fig. 1: eine schematische Darstellung einer Messvorrichtung gemäß einem Ausführungsbeispiel der vorliegenden Erfindung;
- Fig. 2: eine schematische Draufsicht auf einen Ausschnitt eines Geberrades;
- Fig. 3: den Verlauf der von den beiden Sensorköpfen der Fig. 2 gemessenen Signale über die Zeit;
- Fig. 4a - e: schematische Draufsichten auf Ausschnitte eines Geberrades mit verschiedenen Informationsmarken;
- Fig. 5a - c: perspektivische lineare Darstellungen von Abschnitten eines Geberrades;
- Fig. 6: ein Kurbelwellendiagramm, auf dem die Positionen der Informationsmarken gemäß einem ersten Ausführungsbeispiel eingezeichnet sind;
- Fig. 7: ein Kurbelwellendiagramm, auf dem die Positionen der Informationsmarken gemäß einem zweiten Ausführungsbeispiel eingezeichnet sind,
- Fig. 8: eine schematische Seitenansicht eines Geberrades gemäß einem weiteren Ausführungsbeispiel;

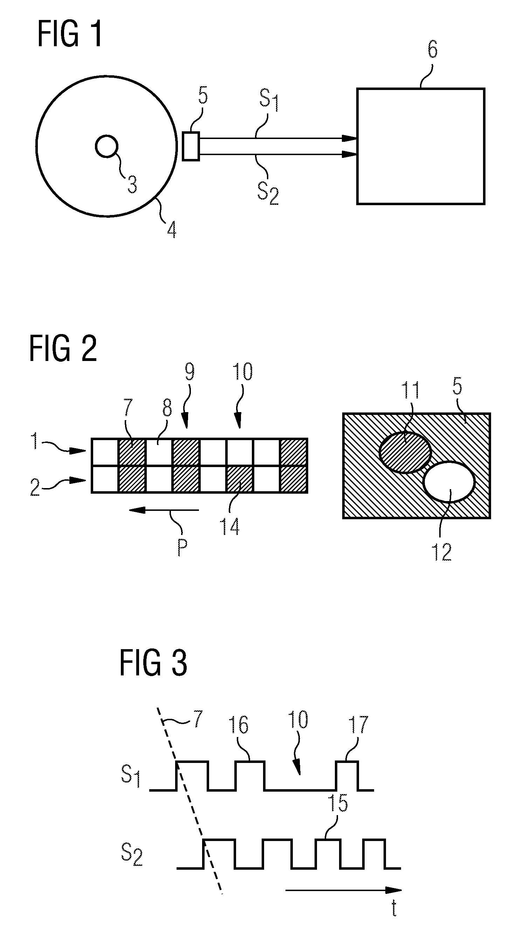

Fig. 1 gibt eine grobe Übersicht über die Bestandteile einer Messvorrichtung zur Erfassung der Winkelstellung einer Nockenwelle oder Kurbelwelle gemäß einem Ausführungsbeispiel der Erfindung. Ein Geberrad 4 ist an einer Nocken- oder Kurbelwelle 3 befestigt und dreht sich mit dieser mit. Auf dem Außenumfang des Rades befinden sich in Axialrichtung gegeneinander versetzt zwei (nicht dargestellte) Spuren, die durch den Sensor 5 abgetastet werden. Die von zwei Sensorköpfen erzeugten Signale S₁ und S₂ werden einem elektronischen Betriebssteuergerät (ECU) 6 der Brennkraftmaschine zugeführt, welche die Signale verarbeitet und aus ihnen eine Winkelstellung der Welle errechnet.

Fig. 2 zeigt schematisch eine Draufsicht auf einen Ausschnitt zweier nebeneinanderliegenden Spuren 1 und 2 sowie einen Sensor 5 mit zwei Sensorköpfen 11 und 12. Der Pfeil P zeigt die Bewegungsrichtung, in der sich das Geberrad an den Sensorköpfen 11 und 12 vorbeidreht.

In dem dargestellten Beispiel ist das Geberrad ein Zahnrad, wobei ein Zahn 7 schattiert dargestellt ist, während eine Lücke 8 zwischen zwei Zähnen weiß dargestellt ist. In dem dargestellten Beispiel sind die Zähne 7 genauso breit wie die Lücken 8 zwischen zwei Zähnen. An Position 9 befindet sich ein über beide Spuren 1 und 2 durchgehender Zahn 7, während an Position 10 auf der Spur 1 ein Zahn fehlt.

Die von den Sensorköpfen 11 und 12 gemessenen Signale S₁ und S₂ sind in Fig. 3 in Abhängigkeit von der Zeit t dargestellt. Ein Zahn wird jeweils als Rechtecksignal detektiert. Da die beiden Sensorköpfe 11 und 12 in Umfangsrichtung leicht gegeneinander versetzt angeordnet sind, wird der durchgehende Zahn 7 von den beiden Sensorköpfen nacheinander erfasst, wie durch die gestrichelte Linie angedeutet ist. An der Lücke 10 misst der Sensorkopf 11 auf Spur 1 ein durchgehend niedriges Signal, während der Sensorkopf 12 entsprechend zeitlich versetzt den Zahn 14 als Rechtecksignal 15 detektiert.

Im dargestellten Beispiel tritt in dem Zeitpunkt an dem die Lücke 10 vom Sensorkopf 11 abgetastet wird, eine plötzliche Beschleunigung der Welle auf, so dass der zeitliche Abstand zwischen den beiden Rechtecksignalen 16 und 17 vor und nach der Lücke 10 kleiner ist als erwartet. Bei einem herkömmlichen Drehzahlmesser müsste jetzt mit einem Timer der Zeitabstand zwischen den Rechtecksignalen 16 und 17 ausgerechnet und abgeschätzt werden, ob der Zeitabstand zwischen den beiden Signalen tatsächlich einer Zahnlücke entspricht, oder ob nur eine plötzliche Verlangsamung der Welle vorliegt. Im gezeigten Beispiel liefert jedoch das Signal S₂ eine Referenz, da an der entsprechenden Position auf Spur 2 ein Zahn detektiert wurde. Es kann genau festgestellt werden, zu welchem Zeitpunkt die Lücke 10 den Sensor passiert hat. Die aktuelle Winkelstellung der Welle lässt sich somit mit großer Genauigkeit feststellen.

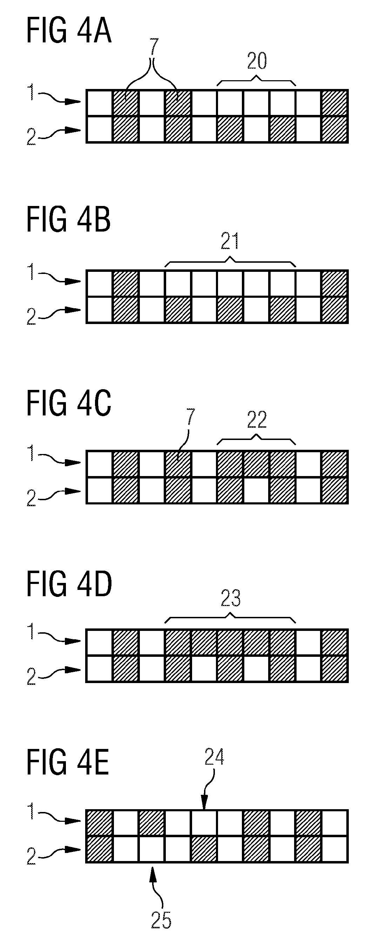

Die Figuren. 4a - e zeigen weitere Beispiele von Zahnanordnungen, die Informationsmarken bilden können. Fig. 4a zeigt beispielsweise auf Spur 1 eine Lücke 20 aus zwei fehlenden Zähnen. In Fig. 4b befindet sich bei 21 eine Lücke aus drei fehlenden Zähnen auf Spur 1. In Fig. 4c ist eine weitere Variante einer Informationsmarke dargestellt: Und zwar besteht diese aus einem Zahn 22, der um eine Zahnteilung länger ist als ein gewöhnlicher Zahn 7. Der Zahn 22 wird vom Sensorkopf 11 als ein durchgehendes High-Level-Signal detektiert. Es ist auch möglich, als Informationsmarke einen Zahn zu verwenden, der um zwei Zahnteilungen länger ist als ein gewöhnlicher Zahn, wie in Fig. 4d bei 23 dargestellt.

Fig. 4e zeigt noch eine andere Möglichkeit, um eine bestimmte Winkelstellung auf dem Geberrad zu definieren. Und zwar wird die Informationsmarke hier durch eine Lücke 24 auf Spur 1 gefolgt von einer Lücke 24 auf Spur 2 25 gebildet.

Die anhand von Fig. 2 und Fig. 4 beschriebenen Muster können auch variiert werden, z.B. können weitere Winkelstellungen definiert werden, indem bei den gezeigten Mustern Spur 1 und 2 vertauscht werden. Eine weitere Möglichkeit besteht darin, die Spur 2 unberührt zu lassen und die Informationsmarken nur auf Spur 1 zu legen. Es können somit eine große Anzahl exakt definierter Positionen auf dem Geberrad definiert werden.

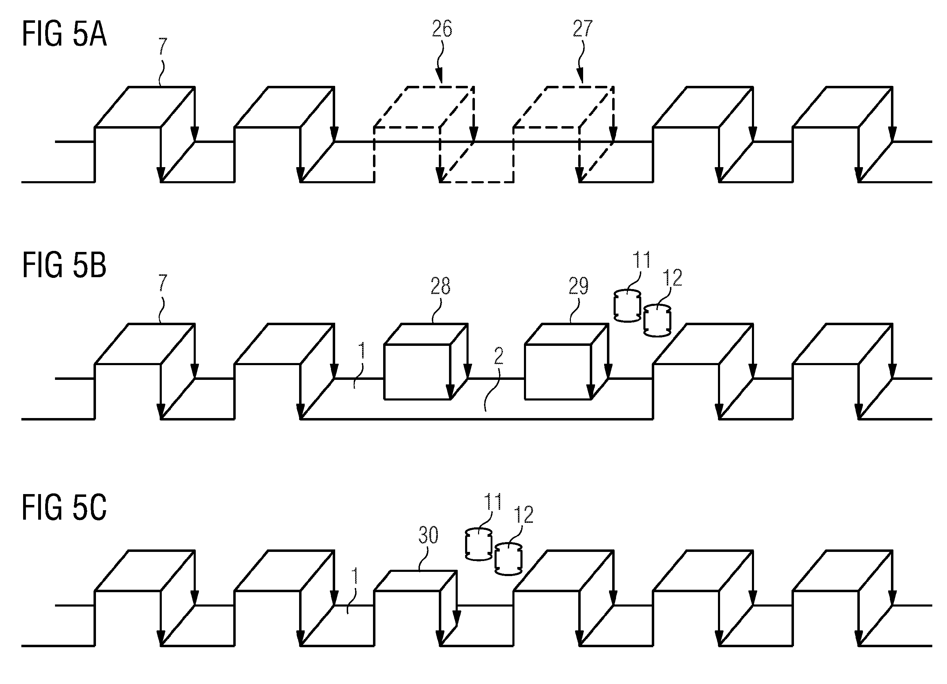

In Fig. 5 sind perspektivische Ansichten von Ausschnitten eines Geberrades dargestellt. Fig. 5a zeigt, auf einer Geraden dargestellt, ein herkömmliches Kurbelwellenrad mit Zähnen 7 und zwei fehlenden Zähnen an den Positionen 26 und 27. In Fig. 5b befinden sich an diesen Positionen nur auf der vorderen Spur 2 Lücken, während auf der hinteren Spur 1 jeweils ein Zahn 28, 29 vorhanden ist. Die Zähne 28, 29 können beispielsweise dadurch hergestellt werden, dass ein über beide Spuren durchgehender Zahn 7 zur Hälfte abgefräst wird. Einige Zähne werden von der einen Axialrichtung, die anderen von der andere Axialrichtung abgefräst, so dass die Halbzähne entweder auf Spur 1 oder auf Spur 2 liegen.

Die beiden Spuren 1 und 2 werden durch die bei 11 und 12 angedeuteten Sensorköpfe abgetastet. Die Sensorköpfe sind hier einzeln gezeichnet. In der Praxis ist es auch möglich, die beiden Tastköpfe in ein Gehäuse zu integrieren. In Fig. 5c ist eine Informationsmarke dargestellt, die durch einen fehlenden Zahn auf der Spur 1 gebildet wird. Auf Spur 2 befindet sich an dieser Position ein (Halb-)Zahn 30.

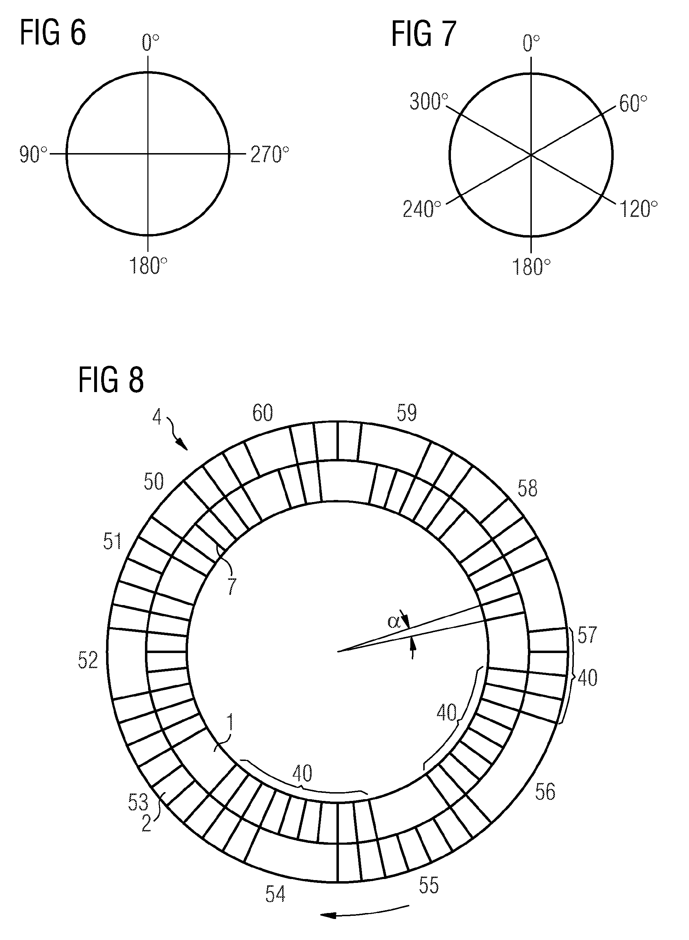

Fig. 6 und 7 zeigen Kurbelwellendiagramme, auf denen die Positionen, an denen sich Informationsmarken befinden, markiert sind. Im Beispiel der Fig. 6 sind beispielsweise Informationsmarken bei 0°, 90°, 180° und 270° angeordnet. Diese Positionen können beispielsweise dem oberen und unteren Totpunkt zugeordnet werden. Im Beispiel der Fig. 7 sind die Informationsmarken alle 60° angeordnet, was bei einem Schrittwinkel von 6° 10 Zähnen entspricht. In den gezeigten Beispielen sind die Informationsmarken in regelmäßigen Abständen angeordnet, es sind aber auch Ausführungsformen mit unregelmäßiger Verteilung denkbar. Auch die Anzahl der Informationsmarken ist frei wählbar. Zum Beispiel kann die Anzahl der vorgesehenen Informationsmarken daran angepasst werden, wie schnell der Motor beim Start synchronisiert werden soll. Das hängt z.B. davon ab, wie hoch der für die Zündung erforderliche Kraftstoffdruck ist und wie schnell dieser Druck erreicht ist.

Fig. 8 zeigt eine schematische Seitenansicht eines Geberrades 4, bei welchem die beiden Spuren 1 und 2 in Radialrichtung nebeneinander angeordnet sind. Die vereinfacht als Striche dargestellten Zähne zeigen somit in Axialrichtung. Bei den bisher gezeigten Ausführungsformen waren die beiden Spuren im Gegensatz hierzu in Axialrichtung nebeneinander angeordnet und die Zähne zeigten in die Radialrichtung. Auf beiden Spuren befinden sich Abschnitte 40, auf denen in gleichmäßigen Winkelabschnitten von jeweils einem Schrittwinkel α Zähne als Winkelmarken angeordnet sind. Um den Umfang des Geberrades 4 sind verschiedene Informationsmarken 50-60 verteilt, die jeweils aus einer Anordnung von fehlenden Zähnen gebildet sind. Einige Informationsmarken bestehen jeweils aus einer Folge von fehlenden Zähnen abwechselnd auf Spur 1 und 2: Bei 57 folgt beispielsweise eine Lücke aus zwei Zähnen auf Spur 2 direkt auf eine Lücke aus zwei Zähnen auf Spur 1. Man beachte aber, dass an keiner Stelle an beiden Spuren ein Zahn fehlt, sondern es befindet sich über den gesamten Umfang des Geberrades alle 6° ein Zahn entweder auf der ersten oder auf der zweiten oder auf beiden Spuren. Insgesamt sind elf voneinander verschiedene Informationsmarken auf dem Geberrad mit (fehlende Zähne eingerechnet) nur 60 Zähnen definiert. Im Schnitt befindet sich also alle 33° eine Informationsmarke. Dies erlaubt beim Start der Brennkraftmaschine eine sehr schnelle Synchronisierung.

Die Erfindung ermöglicht eine sehr genaue Erfassung der Winkelstellung und ist daher insbesondere für Brennkraftmaschinen mit Direkteinspritzung und Dieselmotoren geeignet, bei denen der Einsspritzzeitpunkt sehr genau berechnet werden muss.

## Patentansprüche

1. Vorrichtung zur Erfassung der Winkelstellung einer Nockenwelle oder Kurbelwelle einer Brennkraftmaschine mit einem Geberrad (4), welches drehfest mit der Kurbel- oder Nockenwelle (3) verbindbar ist und eine erste in Umfangsrichtung verlaufende Spur (1) aufweist, auf der abschnittsweise Winkelmarken (7) in gleichmäßigen Winkelabständen von jeweils einem Schrittwinkel (α) angeordnet sind und auf der außerdem mindestens eine von den Winkelmarken (7) verschiedene Informationsmarke (10, 20, 21, 22, 23) angeordnet ist, welche eine bestimmte Winkelstellung der Welle markiert, wobei die Winkel- und Informationsmarke(n) der ersten Spur (1) durch einen ersten Sensorkopf (11) erfassbar sind,
**dadurch gekennzeichnet, dass** das Geberrad (4) ferner eine zweite in Umfangsrichtung verlaufenden Spur (2) aufweist, wobei zumindest in einem Abschnitt der Spur in gleichen Winkelabständen von jeweils einem Schrittwinkel Winkelmarken (7) angeordnet sind, die durch einen zweiten Sensorkopf (12) erfassbar sind.

2. Vorrichtung nach Anspruch 1, bei welcher auch auf der zweiten Spur (2) mindestens eine von den Winkelmarken verschiedene Informationsmarke (20, 21, 22, 23) angeordnet ist, die eine andere Winkelstellung der Welle markiert und durch den zweiten Sensorkopf erfassbar ist.

3. Vorrichtung nach einem der Ansprüche 1 oder 2, bei welcher sich alle Informationsmarken (20, 21, 22, 23) auf einer Spur (1, 2) voneinander unterscheiden.

4. Vorrichtung nach einem der vorhergehenden Ansprüche, bei welcher eine Informationsmarke (10, 20, 21) durch eine oder mehrere fehlende Winkelmarken gebildet wird.

5. Vorrichtung nach einem der vorhergehenden Ansprüche, bei welcher die Winkelmarken auf beiden Spuren derart verteilt sind, dass über den gesamten Umfang des Geberrades in gleichmäßigen Winkelabständen von jeweils einem Schrittwinkel (α) entweder auf der ersten oder auf der zweiten Spur oder auf beiden Spuren eine Winkelmarke (7) vorhanden ist.

6. Vorrichtung nach einem der vorhergehenden Ansprüche, bei welcher das Geberrad (4) ein Zahnrad ist und die Winkelmarken Zähne (7) sind.

7. Vorrichtung nach Anspruch 6, bei welcher eine Informationsmarke (10, 20, 21, 22, 23) auf der ersten und/oder der zweiten Spur aus einem der folgenden gebildet ist:
a) einer Zahnlücke (10), die durch einen fehlenden Zahn gebildet wird,
b) einer Zahnlücke (20), die durch zwei fehlende Zähne gebildet wird,
c) einer Zahnlücke (21), die durch drei fehlende Zähne gebildet wird,
d) einem Zahn (22), der sich über zwei Zahnteilungen erstreckt.
e) einem Zahn (23), der sich über drei Zahnteilungen erstreckt.

8. Vorrichtung nach Anspruch 6 oder 7, bei welcher die erste und die zweite Spur nebeneinander verlaufen und an einer Winkelstellung, an der auf beiden Spuren eine Winkelmarke vorgesehen ist, ein gemeinsamer, sich in der Breite über beide Spuren erstreckender Zahn (7) vorhanden ist.

9. Vorrichtung nach einem der vorhergehenden Ansprüche, welche zur Erfassung der Winkelstellung einer Nockenwelle geeignet ist, wobei der Schrittwinkel 1°-10°, insbesondere 3° beträgt.

10. Vorrichtung nach einem der vorhergehenden Ansprüche, welche zur Erfassung der Winkelstellung einer Kurbelwelle gedacht ist, wobei der Schrittwinkel 1°-10°, insbesondere 6° beträgt.

11. Messanordnung zur Erfassung der Winkelstellung einer Nockenwelle oder Kurbelwelle einer Brennkraftmaschine mit
- einer Vorrichtung mit einem Geberrad nach einem der vorhergehenden Ansprüche,
- einem ersten Sensorkopf (11) zum Abtasten der ersten Spur (1),
- einem zweiten Sensorkopf (12) zum Abtasten der zweiten Spur (2),
- einem Steuergerät (6) zum Auswerten der von den beiden Sensorköpfen ausgegebenen Ausgangssignale (S₁, S₂).

12. Messanordnung nach Anspruch 11 oder 12, bei welcher der erste Sensorkopf (11) gegenüber dem zweiten Sensorkopf (12) in Umfangsrichtung um einen Versatzwinkel versetzt ist, der kleiner ist als der Schrittwinkel (α), oder um eine Summe aus dem Versatzwinkel und einem Vielfachen des Schrittwinkels (α).

13. Verfahren zur Erfassung der Winkelstellung einer Nockenwelle oder Kurbelwelle einer Brennkraftmaschine mittels eines Geberrades (4), welches drehfest mit der Kurbel- oder Nockenwelle verbunden ist und zwei in Umfangsrichtung verlaufende Spuren (1, 2) aufweist, auf denen abschnittsweise in gleichmäßigen Winkelabständen (α) Winkelmarken angeordnet sind, wobei auf einer oder beiden Spuren außerdem mehrere von den Winkelmarken und voneinander verschiedene Informationsmarken (20, 21, 22, 23) vorhanden sind, die jeweils eine bestimmte Winkelstellung der Welle markieren und an Positionen angeordnet sind, an denen sich auf der jeweils anderen Spur ein Abschnitt befindet, in dem in gleichmäßigen Winkelabständen (α) Winkelmarken angeordnet sind,
wobei jede der beiden Spuren auf dem Geberrad (4) beim Umlaufen der Welle durch einen Sensorkopf (11, 12) abgetastet wird, der ein zeitkontinuierliches Ausgangssignal an ein Steuergerät (6) ausgibt,
wobei beim Abtasten einer Winkelmarke (7) ein Taktsignal erzeugt wird und das beim Abtasten einer Informationsmarke erzeugte Signal unter Verwendung des von der jeweils anderen Spur ausgelesenen Taktsignals ausgewertet und einer bestimmten Winkelstellung zugeordnet wird.
